# EUROPÄISCHE PATENTANMELDUNG

(11) **EP 1 493 947 A1**
(43) Veröffentlichungstag der Anmeldung: **05.01.2005**
(21) Anmeldenummer: 04014953.6
(22) Anmeldetag: 25.06.2004
(51) Int. Cl.: F16H 57/02, F16H 1/28

(54) **Zahnrad und Zahnradsatz**

(30) Priorität: 02.07.2003 DE 10329870
(71) Anmelder: GETRAG Getriebe- und Zahnradfabrik Hermann Hagenmeyer GmbH & Cie KG, 74199 Untergruppenbach (DE)
(72) Erfinder: Wolf, Walter, Dr., 71672 Marbach (DE); Rühle, Günter, 74369 Löchgau (DE)
(74) Vertreter: Steil, Christian, Dipl.-Ing.

(57) **Zusammenfassung**

Es wird vorgeschlagen ein Zahnrad (12) mit einem Grundkörper (20), einer Schrägverzahnung (22) und einem Druckkamm (34), der seitlich an dem Grundkörper (20) angeordnet ist, um Axialkräfte aufzunehmen, die beim Zahneingriff mit einem weiteren Zahnrad (14) entstehen. Dabei ist der Druckkamm (34) so angeordnet, dass er die entstehenden Axialkräfte im Bereich der Schrägverzahnung (22) aufnimmt (Fig. 1).

## Beschreibung

Die vorliegende Erfindung betrifft ein Zahnrad mit einem Grundkörper, einer Schrägverzahnung und einem Druckkamm, der seitlich an dem Grundkörper angeordnet ist, um Axialkräfte aufzunehmen, die beim Zahneingriff mit einem weiteren Zahnrad entstehen.

Ferner betrifft die vorliegende Erfindung einen Zahnradsatz aus zwei schräg verzahnten Zahnrädern, von denen eines ein solches Zahnrad ist.

Bei Stirnradgetrieben sind die Zahnräder aus Gründen der Tragfähigkeit und der Geräuschminimierung häufig schräg verzahnt. Durch den Schrägungswinkel entstehen in der Verzahnung beim Zahneingriff Axialkräfte. Diese Axialkräfte, einschließlich der bei großen Raddurchmessern auftretenden Kippmomente, werden in der Regel an den Wellen durch Wälzlager aufgenommen, die sowohl Radial- als auch Axialkräfte aufnehmen können.

Die Lager müssen entsprechend dimensioniert und ausgelegt sein. Bei großen Raddurchmessern ist infolge der Kippmomente ferner eine besonders stabile und steife Lagerung erforderlich, um eine gute Führung des Zahnrades und somit ein geringes Geräuschniveau und ausreichende Lebensdauer zu erreichen. Hierdurch sind generell größere Wälzlager, besonders steife Wellen und eine große Stützbasis der Lager erforderlich, sowie ein entsprechend steifer Radkörper. Dies alles führt zu mehr Bauraum und einem höheren Gewicht. Ebenso ist der Wirkungsgrad aufgrund der Abstützung der Axialkräfte in den Relativlagern bei Relativdrehzahlen verringert.

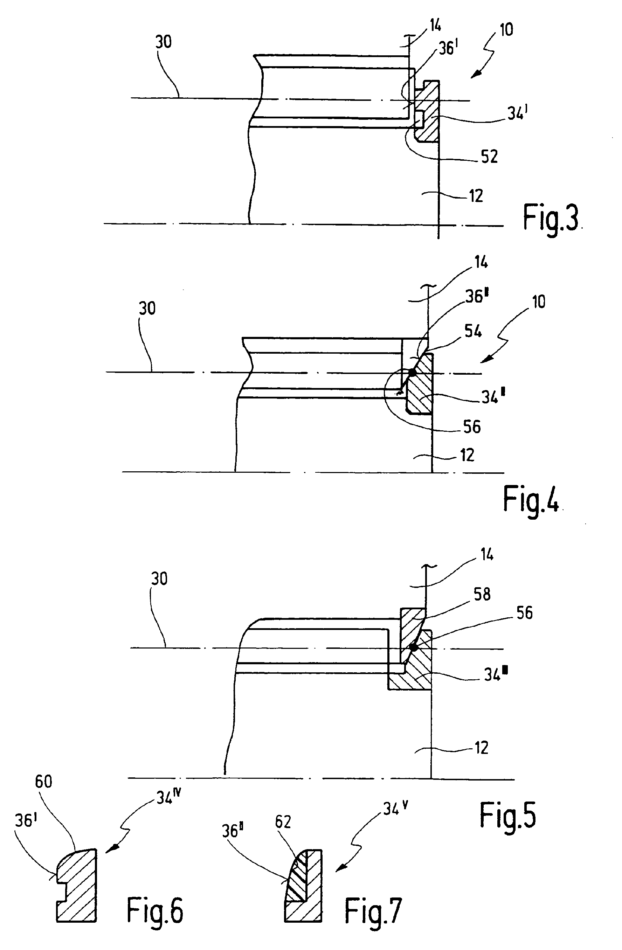

Aus der DE 197 57 855 C2 sind Zahnradgetriebe in Druckkammausführung bekannt. Bei einer bekannten Ausführungsform (dortige Fig. 6) ist an beiden Stirnseiten des antreibenden Ritzels jeweils ein Druckkamm angebracht, die sich in radialer Richtung über die Verzahnung des Ritzels hinaus erstrecken. Die Axialkräfte werden von dem angetriebenen Rad auf eine Kraftaufnahmefläche des jeweiligen Druckkammes übertragen, die am radial äußeren Ende des Druckkammes vorgesehen ist. Hierdurch ergibt sich aufgrund der dort vorhandenen Differenzgeschwindigkeiten eine vergleichsweise hohe Reibung. Ferner muss der Druckkamm aufgrund des langen Hebels sehr massiv ausgebildet werden.

Bei einer weiteren Ausführungsform der DE 197 57 855 C2 (dortige Fig. 7) weist das angetriebene Rad beidseits einen Druckkamm mit axial außenliegender Kraftübertragungsfläche auf. Die dem Ritzel zugeordneten Druckkämme sind nicht am Ritzel, sondern an der das Ritzel tragenden Welle festgelegt. Die Berührlinie der Druckkämme ist dabei nahe am Wälzkreis angeordnet. Hierdurch soll die Reibung verringert werden, und zwar aufgrund der Reduktion der Differenzgeschwindigkeiten bei gleicher Summengeschwindigkeit. Diese Zahnradanordnung weist jedoch in axialer Richtung eine große Baulänge auf.

Aus der DE 198 59 273 A1 ist ein schrägverzahnter Planetenradsatz bekannt, bei dem ein stirnseitig angeordneter radialer Druckkamm einstückig mit dem Hohlrad ausgebildet ist. Die Kontaktfläche des Druckkammes zur Axialkraftübertragung erstreckt sich in radialer Richtung über die Verzahnung des Hohlrades hinaus.

Vor diesem Hintergrund ist es die Aufgabe der vorliegenden Erfindung, ein axial kompaktes Zahnrad in Druckkammausführung sowie einen entsprechenden Zahnradsatz bereitzustellen, die einen hohen Wirkungsgrad aufweisen.

Die Aufgabe wird bei dem eingangs genannten Zahnrad dadurch gelöst, dass der Druckkamm so angeordnet ist, dass er die entstehenden Axialkräfte im Bereich der Schrägverzahnung aufnimmt.

Bei dem eingangs genannten Zahnradsatz wird die Aufgabe durch die Verwendung eines solchen Zahnrades gelöst.

Durch die erfindungsgemäße Anordnung des Druckkammes werden die Axialkräfte der Verzahnung direkt an der Zahnbrust durch den Druckkamm aufgenommen.

Hierdurch werden die Gleitgeschwindigkeiten signifikant reduziert. Somit ist eine Erhöhung des Wirkungsgrades gegeben. Durch die Anordnung des Druckkammes seitlich an den Grundkörper des Zahnrades ergibt sich eine kurze axiale Bauweise.

Das Zahnrad, an dessen Grundkörper der Druckkamm angeordnet ist, ist in der Regel ein antreibendes Ritzel. Das weitere Zahnrad ist in der Regel ein angetriebenes Zahnrad. Der Antrieb kann jedoch auch vertauscht werden.

Dabei versteht sich, dass jedenfalls dann, wenn das Zahnrad in beide Drehrichtungen angetrieben werden kann, an den gegenüberliegenden Seiten des Zahnrades jeweils ein eigener Druckkamm angeordnet ist. Demzufolge benötigt das Zahnrad dann keine axiale Lagerung. Die Positionierung des Zahnrades kann folglich allein über die Planflächen des weiteren Zahnrades erfolgen. Somit kann das Zahnrad schwimmend auf die Welle aufgesteckt werden. Hierdurch vereinfacht sich der Montageprozess.

Auch das weitere Zahnrad benötigt keine axiale Lagerung, um Axialkräfte aufzunehmen. In der Regel sind jedoch Führungslager vorgesehen, die für die Positionierung des weiteren Zahnrades sorgen. Eine besonders steife Welle oder eine breite Stützbasis sowie ein steifer Radkörper des weiteren Zahnrades sind somit nicht mehr erforderlich, da keine Axialkräfte und keine Kippmomente in den Radkörper und die Welle eingeleitet werden. Nach außen treten sowohl bei dem Zahnrad als auch bei dem weiteren Zahnrad nur Radialkräfte auf.

Die Aufgabe wird somit vollkommen gelöst.

Von besonderem Vorzug ist es, wenn der Druckkamm eine ringförmige Kontaktfläche aufweist, die zu der Schrägverzahnung hinweist und dazu ausgelegt ist, beim Zahneingriff von den axialen Stirnflächen der Verzahnung des weiteren Zahnrades berührt zu werden, um die Axialkräfte aufzunehmen.

Durch die Maßnahme, die Axialkräfte über die ringförmige Kontaktfläche direkt von den axialen Stirnflächen der Verzahnung des weiteren Zahnrades aufzunehmen, ergeben sich deutlich geringere Differenzgeschwindigkeiten im Berührungsbereich als bei bekannten Anordnungen, bei denen die Kontaktflächen radial außerhalb der Schrägverzahnung des antreibenden Zahnrades liegen.

Dabei ist es von besonderem Vorteil, wenn die Kontaktfläche in radialer Richtung kleiner bzw. kürzer ist als die Zahnhöhe der Schrägverzahnung des antreibenden Zahnrades.

Hierdurch kann die Reibung weiter verringert werden.

Vorteilhaft ist es dabei ferner, wenn die Kontaktfläche von dem weiteren Zahnrad im Bereich zwischen dem Wälzkreis und dem Fußkreis des weiteren Zahnrades berührt wird.

Hierdurch ergibt sich ein guter Kompromiss zwischen geringer Reibung einerseits und großer Kraftübertragungsfläche zwischen der Stirnseite der Verzahnung des weiteren Zahnrades und der Kontaktfläche des Druckkammes.

Von besonderem Vorteil ist es, wenn die Kontaktfläche von dem weiteren Zahnrad im Bereich des Wälzkreises berührt wird.

Hierdurch ergibt sich eine geringstmögliche Reibung.

Dabei ist es von besonderem Vorteil, wenn die Kontaktfläche in radialer Richtung um den Wälzkreis der Schrägverzahnung herum zentriert ist.

Dies führt zu einer weiteren Verbesserung des Wirkungsgrades.

Von besonderem Vorteil ist es, wenn die Kontaktfläche konvex gekrümmt ist, so dass das weitere Zahnrad die Kontaktfläche entlang einer Kreislinie berührt.

Hierdurch ist die Berührungsfläche auf die Kreislinie reduziert, so dass die Reibung zwischen der Kontaktfläche und dem weiteren Zahnrad besonders minimiert ist.

Auch ist es vorteilhaft, wenn die Kontaktfläche des Druckkammes über einen Einlaufradius in dessen Außenumfang übergeht.

Dabei ist selbst dann, wenn die Kontaktfläche nicht auf eine Kreislinie beschränkt ist, ein gutes Zusammenspiel der Schrägverzahnungen gewährleistet. Ferner kann die Schmierung der in Eingriff stehenden Verzahnungen erleichtert werden.

Gemäß einer weiteren bevorzugten Ausführungsform erstreckt sich der Druckkamm in radialer Richtung nicht über den Kopfkreis der Schrägverzahnung hinaus.

Hierdurch wird eine radial kompakte Bauweise bei geringem Materialeinsatz erzielt. Der Druckkamm kann sich bei alternativen Ausführungsformen jedoch auch über den Kopfkreis der Schrägverzahnung hinaus erstrecken.

Ferner ist es vorteilhaft, wenn der Druckkamm als separates Element hergestellt ist, das an dem Grundkörper befestigt ist.

Hierdurch kann der Druckkamm aus einem Material hergestellt werden, das an die Aufgaben der Kraftübertragung und der Reibungsverringerung besonders angepasst ist.

Der Druckkamm kann beispielsweise aus einem speziellen Stahl hergestellt sein, aber auch aus Kunststoff.

Alternativ oder zusätzlich hierzu kann die Kontaktfläche des Druckkammes reibungsarm ausgebildet sein, insbesondere aus Kunststoff.

Mit anderen Worten kann die Kontaktfläche besonders bearbeitet oder mit einem speziellen Überzug, beispielsweise aus Kunststoff versehen sein, um die Reibung zu verringern.

Geeignete Kunststoffe sind insbesondere PA, PTFE oder ähnliches.

Ferner kann an den Druckkamm ein Einsatz aus einem geeigneten Kunststoff vorgesehen sein, beispielsweise PEEK™.

Bei dem erfindungsgemäßen Zahnradsatz ist es besonders vorteilhaft, wenn die Kontaktfläche des Zahnrades die Axialkräfte unmittelbar von der axialen Stirnseite der Verzahnung des weiteren Zahnrades aufnimmt, mit den oben im Detail beschriebenen Vorteilen.

Ferner ist es vorteilhaft, wenn die Kontaktfläche des Zahnrades konvex gekrümmt ist und wenn die Stirnseite der Verzahnung des weiteren Zahnrades zumindest im Kontaktbereich mit der Kontaktfläche schräg ausgerichtet ist.

Auf diese Weise lässt sich neben der Einrichtung einer Berührlinie auch eine einfache Zentrierung der Zahnräder aufeinander erzielen.

Dabei ist es von besonderem Vorteil, wenn die Stirnseite der Verzahnung des weiteren Zahnrades im Kontaktbereich mit der Kontaktfläche zum Kopfkreis dieser Verzahnung hin schräg nach innen zuläuft.

Auf diese Weise kann die schräge Ausrichtung zur Kontaktfläche des antreibenden Zahnrades konstruktiv einfach realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch einen erfindungsgemäßen Zahnradsatz;
- Fig. 2: eine schematische Querschnittsansicht durch einen erfindungsgemäßen Zahnradsatz;
- Fig. 3: eine weitere Ausführungsform des erfindungsgemäßen Zahnradsatzes;
- Fig. 4: eine weitere Ausführungsform des erfindungsgemäßen Zahnradsatzes;
- Fig. 5: eine weitere Ausführungsform eines Zahnradsatzes;
- Fig. 6: eine alternative Ausgestaltung eines Druckkammes; und
- Fig. 7: eine weitere alternative Ausgestaltung eines Druckkammes.

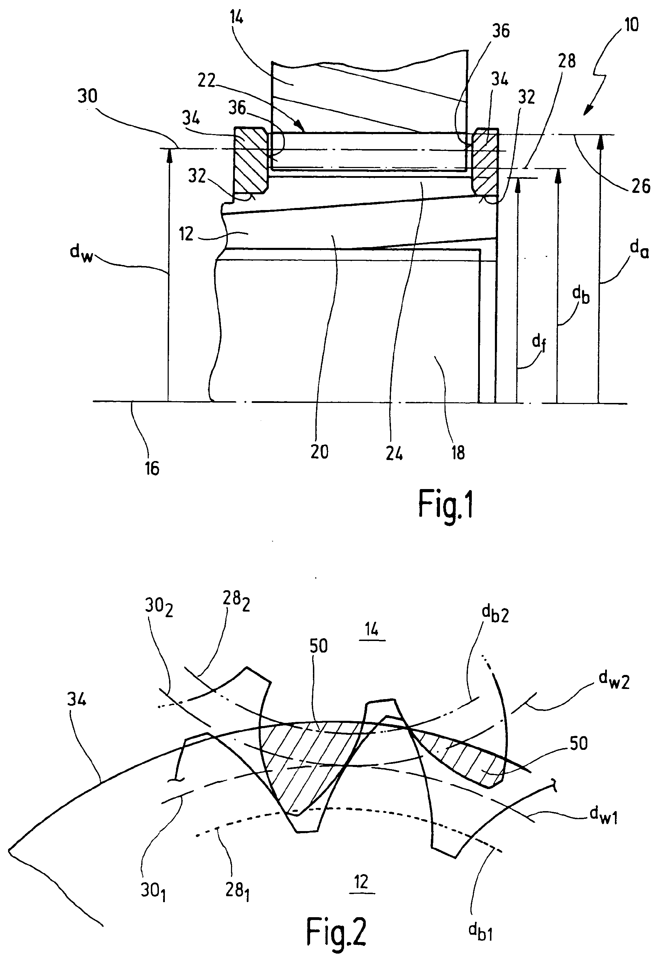

In Fig. 1 und 2 ist ein Zahnradsatz generell mit 10 bezeichnet.

Der Zahnradsatz 10 ist beispielsweise zur Verwendung in einem Zahnradgetriebe für Kraftfahrzeuge geeignet und weist ein erstes, antreibendes Zahnrad (im folgenden Ritzel genannt) und ein zweites, angetriebenes Zahnrad (im folgenden Rad genannt) auf.

Das Ritzel 12 ist an einer Welle 18 festgelegt, die entlang einer Achse 16 ausgerichtet ist.

Das Ritzel 12 weist einen Grundkörper 20 auf, an dessen Außenumfang eine Schrägverzahnung 22 ausgebildet ist.

Die Schrägverzahnung 22 weist einen Fußkreis 24 mit einem Fußkreisdurchmesser d_{f}, einen Kopfkreis 26 mit einem Kopfkreisdurchmesser dₐ und einen Grundkreis 28 mit einem Grundkreisdurchmesser d_{b} auf.

Das Rad 14 weist eine entsprechende Schrägverzahnung auf (in Fig. 1 nicht näher bezeichnet).

In Fig. 2 sind Parameter der Schrägverzahnung 22 des Ritzels 12 mit dem Index "1" gekennzeichnet, die entsprechenden Parameter der Schrägverzahnung des Rades 14 mit dem Index "2".

In Fig. 2 sind die Wälzkreise der zwei Schrägverzahnungen mit 30 angegeben. Der Wälzkreisdurchmesser der Schrägverzahnung 22 ist in Fig. 1 mit d_{w} bezeichnet.

Das Ritzel 12 ist insgesamt breiter ausgebildet als das Rad 14 und weist an beiden axialen Enden jeweils einen radial unterhalb des Fußkreises 24 liegenden Absatz 32 auf. An den Absätzen ist jeweils ein Druckkamm 34 in Form einer ringförmigen Scheibe angeordnet. Die axialen Außenseiten der Druckkämme 34 schließen etwa bündig mit den jeweiligen axialen Stirnseiten des Ritzels 12 ab. Die Druckkämme 34 erstrecken sich in radialer Richtung von den jeweiligen Absätzen 32 bis etwa zur Höhe des Kopfkreises 26 der Schrägverzahnung 22 (in Fig. 1 etwas darüber hinaus, in Fig. 2 bis kurz davor).

Das Rad 14 ist zwischen den zwei Druckkämmen 34 angeordnet, und zwar so, dass dessen Schrägverzahnung etwa auf der Höhe von axial innenliegenden Kontaktflächen 36 der Druckkämme 34 liegt.

Wenn das Ritzel 12 angetrieben wird, wird das Rad 14 je nach Drehrichtung in eine axiale Richtung gedrückt. Hierdurch berührt die Schrägverzahnung des Rades 14 den jeweiligen Druckkamm 34 im Bereich der Kontaktfläche 36, wie es in Fig. 2 schematisch durch die gestrichelten Linien bei 50 angedeutet ist.

Demzufolge werden die Axialkräfte unmittelbar im Bereich der Schrägverzahnung aufgenommen, also dort, wo die Relativgeschwindigkeiten zwischen dem Ritzel 12 und dem Rad 14 vergleichsweise gering sind. Die Axialkräfte der Verzahnung werden folglich direkt an der Zahnbrust durch den Druckkamm 34 aufgenommen.

Demzufolge werden weder von dem Ritzel 12 noch von dem Rad 14 Axialkräfte auf die jeweiligen Wellen ausgeübt. Somit benötigt das Ritzel keine axiale Lagerung. Die Positionierung des Ritzels 12 kann folglich allein über das Zusammenspiel zwischen den Stirnseiten der Schrägverzahnung des Rades 14 und den Kontaktflächen 36 der Druckkämme 34 erfolgen. Demzufolge kann das Ritzel 12 schwimmend auf die Welle 18 aufgesteckt werden, wodurch sich der Montageprozess vereinfacht.

Für die Positionierung des Rades 14 sind ebenfalls keine Axiallager notwendig, lediglich Führungslager, die für die Positionierung sorgen. Weder eine besonders steife Welle, noch eine breite Stützbasis für die Axiallagerung, noch ein steifer Radkörper des Rades 14 sind somit erforderlich, da weder Axialkräfte, noch Kippmomente in den Radkörper bzw. die Welle eingeleitet werden.

Die Druckkämme 34 sind im vorliegenden Fall getrennt von dem Ritzel 12 hergestellt und nachträglich daran festgelegt, beispielsweise durch Schweißen, Kleben, eine Kerbverzahnung oder auf sonstige kraft-, stoff- oder formschlüssige Art und Weise.

Da das Ritzel 12 in beide Drehrichtungen angetrieben werden kann, sind zwei Druckkämme 34 auf beiden Seiten des Ritzels 12 notwendig. Bei nur einer Antriebsrichtung kann ein einzelner Druckkamm 34 hinreichend sein.

Die Kontaktflächen 36 können beschichtet sein, um die Reibung zu verringern, beispielsweise mit einem Kunststoffüberzug oder ähnliches. Alternativ können die Druckkämme 34 auch insgesamt aus einem reibungsarmen Material hergestellt sein.

Gemäß einer weiteren alternativen Ausgestaltung (nicht dargestellt) sind die Druckkämme 34 einstückig mit dem Ritzel 12 vorgesehen.

Anstelle einer Anordnung der Druckkämme 34 an dem Ritzel können die Druckkämme auch an dem Rad 14 angeordnet werden.

In Fig. 3 ist eine bevorzugte Ausführungsform gezeigt, bei der die Druckkämme 34' mit einer innenliegenden axialen Ausnehmung versehen sind, so dass die Kontaktfläche 36' insgesamt verringert wird. Ferner ist dargestellt, dass die Kontaktfläche 36' etwa auf der radialen Höhe des Wälzkreises 30 liegt und in Bezug auf diesen zentriert ist. Hierdurch werden besonders geringe Relativgeschwindigkeiten im Bereich des Reibkontaktes zwischen der axialen Stirnseite der Schrägverzahnung des Rades 14 und der Kontaktfläche 36' erzielt.

Fig. 4 zeigt eine weitere alternative Ausführungsform, bei der die Kontaktfläche 36" des Druckkammes 34'' konvex bzw. ballig ausgeführt ist.

Das Rad 14 ist so ausgebildet, dass dessen Stirnseite im Kontaktbereich mit der Kontaktfläche 36" schräg nach innen zuläuft. Hierdurch wird zwischen der Verzahnung des Rades 14 und der Kontaktfläche 36'' eine linienförmige Berührung eingerichtet, wie es in Fig. 4 durch eine Kontaktlinie 56 schematisch angedeutet ist.

Bei der Ausführungsform der Fig. 5 ist an der Stirnseite des Rades 14 im Bereich von dessen Verzahnung ein umfänglich durchgehender Anlagering vorgesehen, dessen Außenseite mit der Kontaktfläche des Druckkammes 34"' in Berührung tritt.

Fig. 6 zeigt eine alternative Ausführungsform eines Druckkammes 34^{IV}. Die Ausführungsform entspricht generell jener des Druckkammes 34' der Fig. 3. Dabei geht jedoch die Kontaktfläche 36' des Druckkammes 34^{IV} über einen Einlaufradius 60 in dessen Außenumfang über.

Hierdurch wird gewährleistet, dass das Ineinanderspiel der Verzahnungen durch den Druckkamm 34^{IV} nicht negativ beeinflusst wird.

Bei einer weiteren Ausführungsform des Druckkammes 34^{v} (siehe Fig. 7) ist eine Kontaktfläche 36'' in konvexer Ausgestaltung durch einen Einsatz 62 aus Kunststoff gebildet, der beispielsweise aus PA,PTFE, PEEK™ oder ähnliches gebildet sein kann.

## Patentansprüche

1. Zahnrad (12) mit einem Grundkörper (20), einer Schrägverzahnung (22) und einem Druckkamm (34), der seitlich an dem Grundkörper (20) angeordnet ist, um Axialkräfte aufzunehmen, die beim Zahneingriff mit einem weiteren Zahnrad (14) entstehen,
**dadurch gekennzeichnet, dass**
der Druckkamm (34) so angeordnet ist, dass er die entstehenden Axialkräfte im Bereich der Schrägverzahnung (22) aufnimmt.

2. Zahnrad nach Anspruch 1, **dadurch gekennzeichnet, dass** der Druckkamm (34) eine ringförmige Kontaktfläche (36) aufweist, die zu der Schrägverzahnung (22) hinweist und dazu ausgelegt ist, beim Zahneingriff von den axialen Stirnflächen der Verzahnung (42) des weiteren Zahnrades (14) berührt zu werden, um die Axialkräfte aufzunehmen.

3. Zahnrad nach Anspruch 2, **dadurch gekennzeichnet, dass** die Kontaktfläche (36) in radialer Richtung kleiner ist als die Zahnhöhe (da - df) der Schrägverzahnung (22).

4. Zahnrad nach Anspruch 2 oder 3, **dadurch gekennzeichnet dass**, die Kontaktfläche (36) von dem weiteren Zahnrad (14) im Bereich zwischen dem Wälzkreis (30) und dem Fußkreis des weiteren Zahnrades (14) berührt wird.

5. Zahnrad nach Anspruch 2 oder 3, **dadurch gekennzeichnet, dass** die Kontaktfläche (36) von dem weiteren Zahnrad (14) im Bereich des Wälzkreises (30) berührt wird.

6. Zahnrad nach Anspruch 5, **dadurch gekennzeichnet, dass** die Kontaktfläche (36) in radialer Richtung um den Wälzkreis (30) der Schrägverzahnung (22) herum zentriert ist.

7. Zahnrad nach einem der Ansprüche 2 bis 6, **dadurch gekennzeichnet, dass** die Kontaktfläche (36") konvex gekrümmt ist, so dass das weitere Zahnrad (14) die Kontaktfläche (36") entlang einer Kreislinie (56) berührt.

8. Zahnrad nach einem der Ansprüche 2 bis 7, **dadurch gekennzeichnet, dass** die Kontaktfläche (36') des Druckkammes (34^{IV}) über einen Einlaufradius (60) in dessen Außenumfang übergeht.

9. Zahnrad nach einem der Ansprüche 1 bis 8, **dadurch gekennzeichnet, dass** der Druckkamm (34) sich in radialer Richtung nicht über den Kopfkreis (26) der Schrägverzahnung (22) hinaus erstreckt.

10. Zahnrad nach einem der Ansprüche 1 bis 8, **dadurch gekennzeichnet, dass** der Druckkamm (34) als separates Element hergestellt ist, das an dem Grundkörper (20) befestigt ist.

11. Zahnrad nach einem der Ansprüche 2 bis 10, **dadurch gekennzeichnet, dass** die Kontaktfläche (36) reibungsarm ausgebildet ist, insbesondere aus Kunststoff.

12. Zahnradsatz (10) aus zwei schrägverzahnten Zahnrädern (12, 14), von denen eines ein Zahnrad (12) nach einem der Ansprüche 1 bis 11 ist.

13. Zahnradsatz nach Anspruch 12, **dadurch gekennzeichnet, dass** die Kontaktfläche (36) des Zahnrades (12) die Axialkräfte von der axialen Stirnseite der Verzahnung des weiteren Zahnrades (14) aufnimmt.

14. Zahnradsatz nach Anspruch 12 oder 13, **dadurch gekennzeichnet, dass** die Kontaktfläche (36) des Zahnrades (12) konvex gekrümmt ist und dass die Stirnseite (54) der Verzahnung (42) des weiteren Zahnrades (14) zumindest im Kontaktbereich mit der Kontaktfläche (36") schräg ausgerichtet ist.

15. Zahnradsatz nach Anspruch 14, **dadurch gekennzeichnet, dass** die Stirnseite (54) der Verzahnung des weiteren Zahnrades (14) im Kontaktbereich mit der Kontaktfläche (36") zum Kopfkreis hin schräg nach innen zuläuft.
